# EUROPEAN PATENT APPLICATION

(11) **EP 2 338 740 A1**
(43) Date of publication of application: **29.06.2011**
(21) Application number: 10197206.5
(22) Date of filing: 28.12.2010
(51) Int. Cl.: B60R 9/10

(54) **Device for carrying a bicycle, to be attached to a vehicle**

(30) Priority: 28.12.2009 NL 1037592
(71) Applicant: Qarden B.V., 8041 AC Zwolle (NL)
(72) Inventor: Snellink, Sander, 8023 KM Zwolle (NL); Visker, Martijn Adriaan, 7731 WE Ommen (NL)
(74) Representative: Jansen, Cornelis Marinus

(57) **Abstract**

A device to be attached to a vehicle, for carrying a load, in particular a bicycle (2), comprising a base frame (3; 103) to be attached to the vehicle (4; 104) and a carrying element (5; 105) connected with the base frame (3; 103) and movable between a transport position raised relatively high above a ground (G) and a loading and/or unloading position located relatively nearer to the ground (G), characterized in that in the loading and/or unloading position only a part of the carrying element (5; 105) is located lower than in the transport position.

By moving only a part of the carrying element (5; 105) up or down when shifting between the transport position and the loading and/or unloading position, a simpler, compact, light, and cheaper-to-produce lifting mechanism can suffice.

## Description

The invention relates to a device to be attached to a vehicle, for carrying a load, in particular a bicycle, comprising a base frame to be attached to the vehicle and a carrying element connected with the base frame and movable between a transport position raised relatively high above a ground and a loading and/or unloading position located relatively nearer to the ground. Such a device is generally known under the collective name of bicycle rack.

Bicycle racks are used to transport one or more bicycles by car, for example, from home to a location where a recreational bicycle ride will be made. Known bicycle racks are generally fitted on a towing hook of the car, with the carrying element then located at a height of a few tens of centimeters above the road surface. Users therefore need to lift the bicycles over such height to place them on the bicycle rack.

There are various bicycle racks known in which a carrying element is height-adjustable.

For instance, in Dutch patent 1 023 396 a bicycle rack is described where a carrying part consisting of a supporting bracket with two channels is connected by means of two pairs of parallel arms with a base part fitted on the towing hook. For moving the carrying part up and down, a hydraulic jack is provided, which can be operated by a manually or electrically driven pump. The arms in this device extend in line with the car.

A similar carrier, especially intended for transportation of motorcycles, is known from the American patent publication 2006/0231581. A carrying box is connected by means of a single pair of parallel arms with a base frame, which is attached to a towing structure of a pick-up. The arms extend parallel to the rear side of the vehicle. To move the carrying box up and down, a large lever is provided.

Finally, from the European patent publication 1 818 219, a lifting device is known, which can be fitted on the towing hook of a car, and which itself shows an upwardly and downwardly movable towing hook. On this movable towing hook, a conventional, non-adjustable bicycle rack can be fitted.

These known height-adjustable bicycle racks all have the disadvantage of typically being structurally complex and consequently relatively heavy and costly. Moreover, due to their structure and for the purpose of their movement, they require comparatively much free space at the rear of the vehicle.

The object of the invention is now to provide a carrying device of the above-described type in which these disadvantages do not occur or at least occur to a lesser extent. According to the invention, this is achieved in that in the loading and/or unloading position only a part of the carrying element is located lower than in the transport position. By moving only a part of the carrying element down and back up again, a simpler, more compact, lighter, and cheaper-to-produce lifting mechanism can suffice.

Preferably, the carrying element in the loading and/or unloading position defines an inclined runway extending from near the ground to a relatively high-located central part of the base frame. Thus, the load, in particular a bicycle, can be simply rolled onto the carrying element when it takes up its loading and/or unloading position.

To achieve the desired movement of the carrying element in a structurally simple manner, the base frame can define an at least partly inclined guideway, along which the carrying element can be movable.

Preferably, the runway and/or the guideway is or are directed substantially transversely to a direction of travel of the vehicle. Thus, for loading and/or unloading of loads, especially bicycles, no extra space needs to be kept clear behind the vehicle to which the device is attached.

When the carrying element is movable from the transport position to two loading and/or unloading positions on opposite sides of the base frame, the device can be loaded or unloaded from two sides, depending on the traffic situation around the vehicle to which the device is attached.

Preferably, the runway and/or the guideway is or are curved. Thus, a uniform movement of the bicycle over the runway and of the carrying element over the guideway is achieved.

With advantage, the carrying element is slidable along the guideway. To minimize the resistance involved, the guideway and/or the carrying element preferably comprises or comprise guide rollers.

To enhance stability of the carrying device during loading and unloading, it is preferably provided with means for fixing the carrying element in the loading and/or unloading position.

When the fixation means are settable, the height of the carrying element in the loading and/or unloading position can be varied, depending on the ground.

In a structurally simply design, the fixation means comprise an operable locking element arranged on the base frame or the carrying element and a series of openings formed in the carrying element or the base frame and cooperating with the locking element.

Additionally, or instead, the fixation means can comprise a ratchet mechanism arranged on the base frame or the carrying element.

For a safe transport of the load, the carrying device is preferably provided with means for fixing the carrying element in the transport position.

To return the carrying element, especially after loading, to its high transport position in a simple manner, the carrying device may be provided with means for biasing the carrying element towards the transport position.

In a structurally simple design of the carrying device, the biasing means comprise at least one spring arranged between the carrying element and the base frame.

When the carrying element is movable to two sides, the biasing means preferably comprise two springs arranged between the carrying element and the base frame, of which in each case one works as compression spring and one as extension spring.

The compression spring and extension spring then may be mutually connected at their adjacent ends with interposition of at least one connecting element, which cooperates with a stop on the base frame or carrying element. Through cooperation of the connecting element and the stop, one spring is compressed and the other extended.

To create sufficient space for the compression spring, the carrying device may be provided with two stops placed substantially symmetrically with respect to a centerline of the device.

To limit the number of separate components from which the carrying device is built up, the carrying element preferably comprises a profile that exhibits a number of hollow chambers.

With advantage, the at least one spring then may be received in one of the hollow chambers of the profile of the carrying element.

Further, one of the hollow chambers of the profile of the carrying element may cooperate with the guideway of the base frame.

Preferably, the profile of the carrying element defines at the top a channel for supporting a front wheel and a rear wheel of a bicycle, allowing the bicycle to be simply rolled on and off. For simplicity of construction and limitation of the weight, it is then advantageous if the carrying element is of one-part design and is movable in its entirety relative to the base frame between the transport position and the loading and/or unloading position.

To enhance user convenience, the carrying device may further be provided with means connected with the base frame and/or the carrying element for transporting the device.

When the transporting means comprise at least one wheel arranged near an end of the carrying element, the carrying device can be simply picked up at the other end of the carrying element and be dragged along.

The invention will now be elucidated on the basis of an example, with reference to the appended drawing, in which:
Fig. 1 is a perspective view of the carrying device according to the invention when it is attached to a vehicle and the carrying element takes up the loading and/or unloading position, while a bicycle is being rolled onto it,
Fig. 2 is a perspective view of the carrying device when being brought to a vehicle,
Fig. 3 is a partly cutaway perspective view of the carrying device in the loading and/or unloading position as shown in Fig. 1,
Fig. 4 is a detail view on an enlarged scale of the part of the carrying device that is indicated in Fig. 3 by the arrow IV,
Fig. 5 is a detail view on a still further enlarged scale according to the arrow V in Fig. 4,
Fig. 6 shows a cross section through the profile of the carrying element according to the arrow VI in Fig. 5,
Fig. 7 is a perspective view of the carrying device according to the invention when it is loaded with two bicycles, and the carrying element is in the transport position, and
Fig. 8 is a rear view of a vehicle to which a second example of a device according to the invention is coupled.

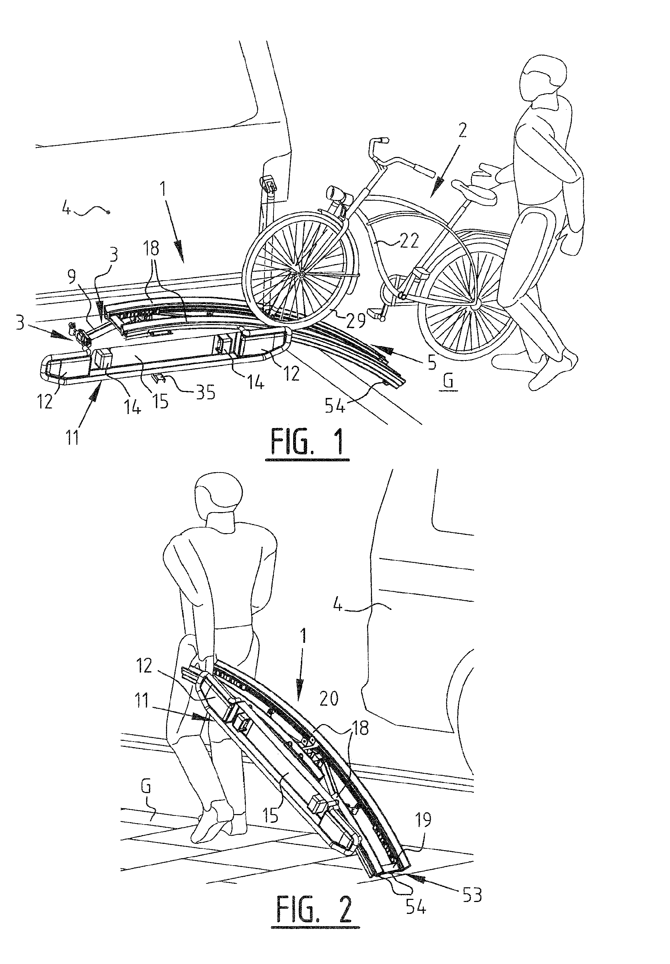

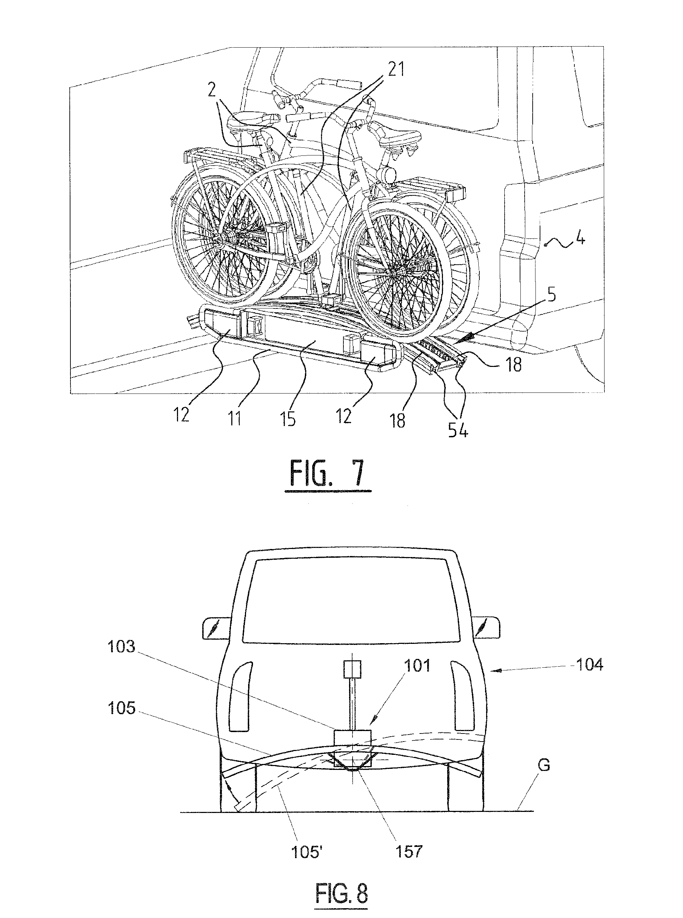

A device 1 according to the invention for carrying a load 2, in particular a bicycle, comprises a base frame 3 which is to be attached to a vehicle 4. Further, the carrying device 1 comprises a carrying element 5 which is connected with the base frame 3. The carrying element 5 is movable in its entirety between a transport position raised relatively high above a ground G (Fig. 7) and a loading and/or unloading position (Fig. 1) in which, of two opposite ends of the carrying element, only one end is nearer to the ground G than in the transport position, so that a bicycle 2 can easily be pushed onto the carrying element 5. In this loading and/or unloading position, not the whole carrying element 5 is lowered, but only part of it is lower than in the transport position. This lower part then forms a ramp for the bicycle 2, while the rest of the carrying element 5 defines an inclined runway, which extends from near the ground G to a relatively high-located central part 6 of the base frame 3.

The central part 6 of the base frame 3 carries a conventional coupling 7 with which the carrying device 1 can be mounted on a towing hook of the vehicle 4, as well as means 8, to be discussed below, for fixing the carrying element 5 in different positions. Further, the base frame 3 exhibits two laterally extending arms 9 each carrying a fitting 10 at their ends. The base frame 3 additionally comprises a lighting beam 11, which carries two lighting units 12 and a license plate holder 13. The license plate holder 13 is provided with two secondary lighting units 14 for lighting a license plate 15 received therein. The central part 6 and the fittings 10 on the ends of the arms 9 each carry pairs of guide rollers 16, 17, which jointly define a guideway for the carrying element 5. As the guide rollers 16 on the fittings 10 are disposed lower than the rollers 17 on the central part 6, the guideway on opposite sides of the central part 6 runs down at a small angle. Further, the guideway, just like the runway defined by the carrying element, is directed transversely to the direction of travel of the vehicle 4.

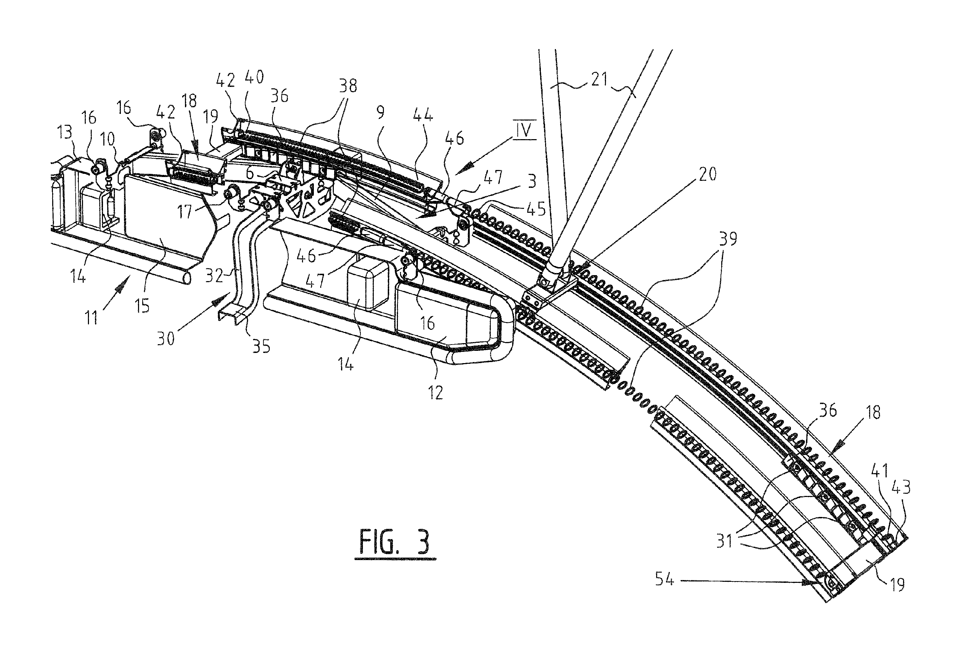

In the example shown, the carrying element 5 is formed by two mutually parallel, curved profile parts 18, which are connected at their ends by two bridge pieces 19. In addition, the profile parts 18 are connected in the center by a bridge piece 20 (Fig. 3), which at the same time functions as support for two foldable standards 21, to which in each case a frame 22 of a bicycle 2 loaded onto the carrying element 5 can be attached. Each profile part 18 is slidable — or rather: mobile — over one of the two series of guide rollers 16, 17. To this end, the profile part 18 exhibits a hollow chamber 24 bounded by a flange 23, in which the guide rollers 16, 17 are received. Thus, the carrying element 5 is movable from the transport position to one of two loading and/or unloading positions on opposite sides of the base frame 3. As the profile parts 18 are curved, this also applies to the guideway defined by the guide rollers 16, 17 in cooperation with the profile parts 18.

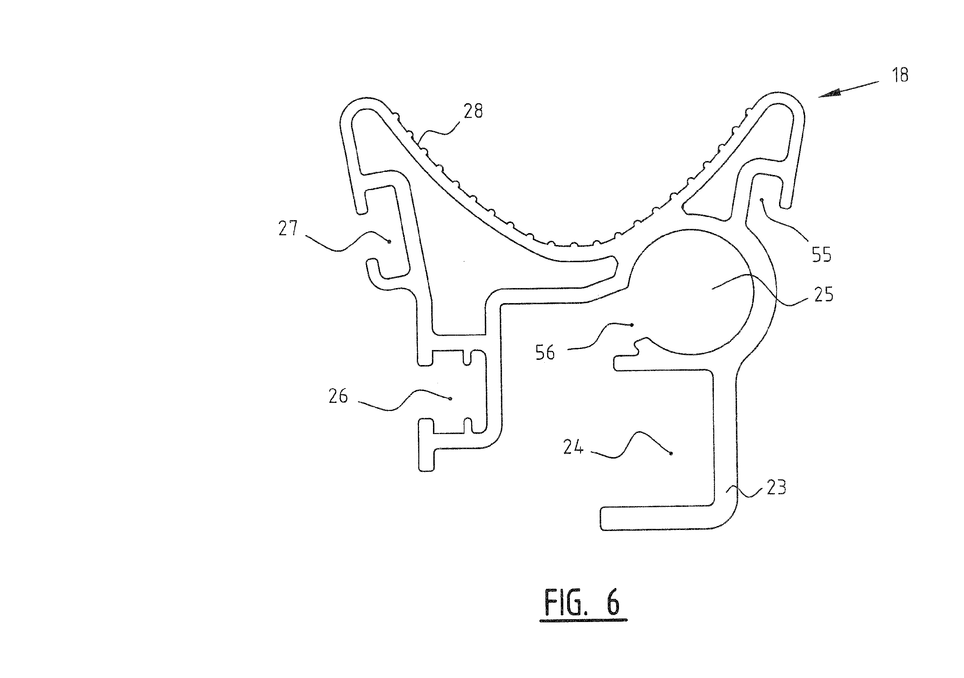

Each profile part 18 is further provided with another hollow chamber 25 and with a number of recesses 26, 27, 55 (Fig. 6), whose function will be elucidated hereinafter. In addition, the top surface 28 of each profile part is hollow, thereby forming a channel in which a wheel 29 of a bicycle 2 loaded onto the carrying element 5 can be received in a stable manner.

As already stated, the carrying device 1 is provided with means 8 for fixing the carrying element 5 in its different positions. These fixation means 8 are configured to fix the carrying element 5 either in its loading and/or unloading position, or in its high transport position. With a view to fixation in the loading and/or unloading position, the fixation means 8 are settable, so that the carrying element 5 can be fixed at different heights. Thus, allowance can be made for the presence, and height, of, for example, a pavement along which the vehicle 4 is parked.

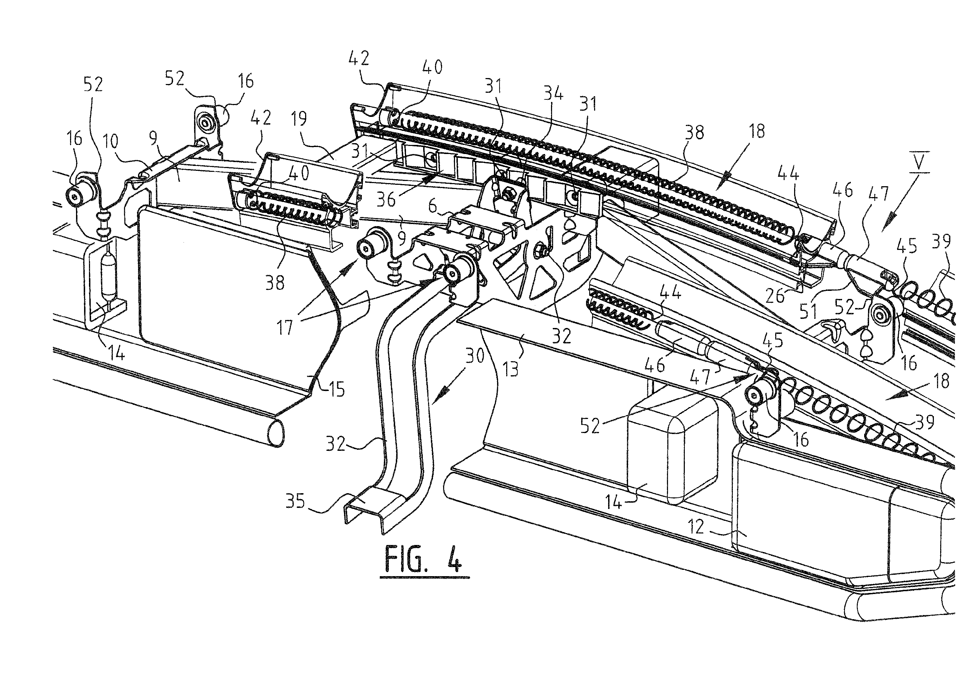

In the example shown, the fixation means 8 comprise an operable locking element 30 which is arranged on the central part 6 of the base frame 3, and a series of openings 31, formed in the carrying element 5, which cooperate with the locking element 30. The locking element 30 is formed by an arm 32 which is attached in the central part 6 in a manner pivotable about an axis 33 (Fig. 4). An end of the arm 32 carries a locking pin 34, while the opposite end is designed as a pedal 35. The arm 32 is biased by a spring - not shown here - towards a locked position, in which the locking pin 34 extends into one of the openings 31. By stepping on the pedal 35, the arm 32 is pivoted, against the bias of the spring, to the unlocked position, in which the locking pin 34 lies clear of the openings 31. The openings 31, incidentally, are formed in a locking block 36, which, at the end of the profile part 18, has been slid into the recess 26 and secured. This locking block 36 is provided with a sawtooth profile, so that in combination with the biasing spring of the locking element 30 it also forms a ratchet mechanism. This prevents the carrying element 5 from unintentionally returning during a displacement from the transport position to the loading and/or unloading position. The locking element 30 may also, in lieu of or in addition to the connection with a pedal 35, be coupled with another operating element, such as a press knob or press plate, to unlock the carrying element relative to the base frame.

To fix the carrying element 5 in its transport position, the central bridge piece 20 between the profile parts 18 is also provided with an opening - not shown here - for therein receiving the locking pin 34. Additionally, there may be provided a clamping provision, such as a crossbar, to clamp the carrying element 5 in the transport position relative to the base frame 3. This prevents wobbling and/or rattling of the carrying element 5 during driving.

In order for the carrying element 5, when loaded with one or more bicycles 2, to be returned from the loading and/or unloading position to the high transport position without undue effort, the carrying device 1 in the example shown is provided with means for biasing the carrying element 5 to the transport position. These biasing means here comprise two pairs of springs 38, 39, which are received in the cylindrical hollow chambers 25 of the profile parts 18 and which are each tensioned between the carrying element 5 and the base frame 3. Of each pair of springs 38, 39, in each case one spring serves as compression spring and the other as extension spring. In the example, the carrying element 5 is shown in its loading and/or unloading position on the right-hand side of the vehicle 4, with the springs 38 compressed and the springs 39 extended. Each spring 38, 39 is attached by an end 40, 41 to one of the ends 42, 43 of the profile part 18, and attached by its opposite end 44, 45 to a connecting element 46, 47. Each connecting element 46, 47 exhibits a torpedo-shaped body having a head 48, 49 and a fin-shaped projection 50, 51 attached to the body. Each of these projections 50, 51 extends through a channel 56 which connects the hollow chambers 24, 25 in the profile part 18 with each other. The projections 50, 51 cooperate with two stops 52, which form part of the fittings 10 on the ends of the arms 9 of the base frame 3, and which are therefore placed symmetrically with respect to the central part 6. These stops 52 project just like the guide rollers 16, 17 into the hollow chambers 24 of the two profile parts 18.

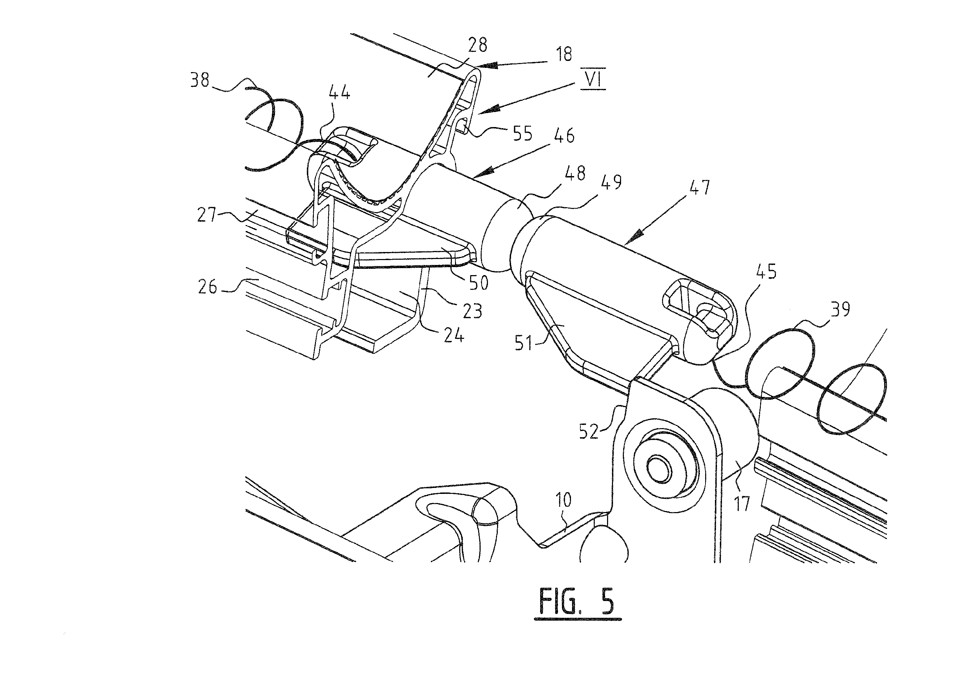

In the example shown, the fin-shaped projection 51 of the right-hand connecting element 47 is stopped by the stop 52 on the right-hand arm 9 (Fig. 5), so that the spring 39 attached thereto is extended when the carrying element 5 is moved to its right-hand loading and/or unloading position. This connecting element 47 presses its head 49 against the head 48 of the left-hand connecting element 46, so that this is also stopped, and the spring 38 attached thereto is compressed. When, conversely, the carrying element 5 is moved to its loading and/or unloading position on the left-hand side of the vehicle 4, the projection 50 of the left-hand connecting element 46 will enter into engagement with the stop 52 on the left-hand arm 9, and the spring 38 will be extended, while the spring 39 will be compressed.

With a view to user convenience, finally, the carrying device 1 is here provided with means 53 for transporting it. In the example shown, these transport means 53 are connected with the carrying element 5, and comprise a pair of wheels 54 arranged near an end of the carrying element 5. These transport wheels 54 are here bearing-mounted in the bridge piece 19 which connects the ends 43 of the profile parts 18. The bridge piece 19 which connects the opposite ends 42 of the profile parts 18 can then serve as a grip, by which the carrying device 1 can be dragged along (Fig. 2).

Now, the operation of the carrying device 1 according to the invention is as follows.

After a user has brought the carrying device 1 to his vehicle 4 (Fig. 2), he or she mounts the carrying device onto the towing hook of the vehicle 4. The carrying element 5 is then, with respect to the base frame 3, in the central position which is regarded as transport position. In this position the carrying element 5 is fixed by the locking pin 34 which extends into the opening in the central bridge piece 20. Thereupon, by stepping on the pedal 35 the locking pin 34 is pulled from that opening, so that the carrying element 5 is unlocked and can be moved to either side along the guideway defined by the guide rollers 16, 17, obliquely down to its loading and/or unloading position. One pair of springs is thereby extended and the other pair is compressed. As soon as the respective end of the carrying element 5 contacts or at least approaches the ground G, the carrying element 5 is fixed by pressing the locking pin 34 in one of the openings 31 in a locking block 36. Thereupon a front wheel 29 of a bicycle 2 is rolled into the channel of one of the profile parts 18 and the bicycle 2 is pushed up until it has both wheels 29 standing on the carrying element 5 (Fig. 1). There the bicycle 2 can be fixed relative to the carrying device 1 by attaching the frame 22 to one of the standards 21. Also, the two wheels 29 may be fixed, for example with the aid of straps or slings - not shown here ―which can be tightened between the recesses 27, 55 of each profile part 18. Thereupon the carrying element 5 is unlocked again by stepping on the pedal 35, whereupon the carrying element 5 can be pushed back to its central, relatively high transport position. This movement is supported by the biasing springs 38, 39, and is hence relatively light. In the transport position, the carrying element 5 is then fixed again in that the locking pin 34 falls into the opening of the central bridge piece 20. Now the vehicle 4 can start to drive. When the vehicle 4 has arrived at the destination, the transported bicycles 2 can be unloaded again by unlocking the carrying element 5 once again and moving it down to the loading and/or unloading position.

Thus the carrying device 1 according to the invention makes it possible to transport in a simple manner a load, in particular a bicycle 2, with the aid of a vehicle 4. Loading and unloading of the bicycles 2 requires only a few simple operations, which require little force and can be carried out quickly. The carrying device 1 is simple in structure, compact and relatively light. This last is relevant to limit the total mass attached to the back of the car for the benefit of the driving properties, and because the maximum load that may be applied to a towing hook, depending on the type of towing hook and the type of car, is mostly 50 or 75 kg. Accordingly, in order to be left with a reasonable load capacity for the transport of the bicycles, the construction of the carrying device 1 itself needs to be as light as possible.

Although the invention has been described hereinabove on the basis of an example, it will be clear that it is not limited thereto but within the purview of what is defined by the claims may be varied in many ways. For instance, the carrying element and the base frame could each be different in form and structure than shown here. The base frame may be configured, for example, to be coupled to the vehicle in a different manner, for example, by being supported against portions of the bodywork or, as is known, for example, from German patent application 198 26 077, may be configured to be coupled to special provisions on the back of the vehicle for hitching on a load carrier. Also, the guiding of the carrying element over the base frame and the fixation of the carrying element with respect to the base frame could be designed differently.

Fig. 8 shows by way of example an alternative embodiment of a device 101 according to the invention mounted to a rear side of a car 104. The device 101 according to this example is also configured for carrying a mobile load, in particular a bicycle. A base frame 103 is coupled to a towing hook of the vehicle 104. This base frame could also be configured to be coupled to the vehicle in a different manner. The base frame 103 carries a carrying element in the form of a channel 105, which carrying element 105 is connected to the base frame 3 in a manner pivotable about an axis 157. This carrying element 105 as a whole is pivotable between a transport position relatively high above a ground G and a loading and/or unloading position 105' in which one end of the carrying element 105 is nearer to the ground G than in the transport position in which both ends are approximately equally high above the ground. Via the downwardly pivoted end, a bicycle can easily be rolled onto the carrying element, whereby the wheels of the bicycle, for them to be placed on the carrying element, do not need to be lifted from the ground or at most need to be lifted from the ground over a small distance. The carrying element 105 in the transport position may be locked relative to the base frame 103. Preferably, also provisions are made to eliminate play between the base frame 103 and the carrying element 105 in the transport position, such as a clamping construction, for example a crossbar, or a locking having centering action. To facilitate riding up a bicycle, provision may also be made for the carrying element to be fixed relative to the base frame 103 in the loading and/or unloading position as well.

## Claims

1. A device to be attached to a vehicle, for carrying a load, in particular a bicycle (2), comprising a base frame (3; 103) to be attached to the vehicle (4; 104) and a carrying element (5; 105) connected with the base frame (3; 103) and movable between a transport position raised relatively high above a ground (G) and a loading and/or unloading position located relatively nearer to the ground (G), **characterized in that** in the loading and/or unloading position only a part of the carrying element (5; 105) is located lower than in the transport position.

2. A carrying device according to claim 1, **characterized in that** the carrying element (5; 105) in the loading and/or unloading position defines an inclined runway extending from near the ground (G) to a relatively high-located central part (6) of the base frame (3; 103).

3. A carrying device according to claim 1 or 2, **characterized in that** the base frame (3:103) defines an at least partly inclined guideway, along which the carrying element (5; 105) is movable.

4. A carrying device according to claim 2 or 3, **characterized in that** the runway and/or the guideway is or are directed substantially transversely to a direction of travel of the vehicle.

5. A carrying device according to any one of the preceding claims, **characterized in that** the carrying element (5; 105) is movable from the transport position to two loading and/or unloading positions on opposite sides of the base frame (3; 103).

6. A carrying device according to any one of the preceding claims, **characterized in that** the runway and/or the guideway is or are curved.

7. A carrying device according to claim 3, **characterized in that** the carrying element (5) is slidable along the guideway.

8. A carrying device according to claim 7, **characterized in that** the guideway and/or the carrying element (5) comprises or comprise guide rollers (16, 17).

9. A carrying device according to any one of the preceding claims, **characterized by** means (8) for fixing the carrying element (5; 105) in the loading and/or unloading position.

10. A carrying device according to claim 9, **characterized in that** the fixation means (8) comprise an operable locking element (30, 34) arranged on the base frame (3) or the carrying element (5) and a series of openings (31) formed in the carrying element (5) or the base frame (3) and cooperating with the locking element (30, 34).

11. A carrying device according to claim 9 or 10, **characterized in that** the fixation means (8) comprise a ratchet mechanism (30, 34, 36) arranged on the base frame (3) or the carrying element (5).

12. A carrying device according to any one of the preceding claims, **characterized by** means (38, 39) for biasing the carrying element (5) towards the transport position.

13. A carrying device according to claim 3, **characterized by** two stops (52) placed substantially symmetrically with respect to a centerline of the device, for limiting displaceability of the carrying element (5) along the guideway.

14. A carrying device according to any one of the preceding claims, **characterized in that** the carrying element (5) comprises a profile (18) which exhibits a number of hollow chambers (25).

15. A carrying device according to claim 14, **characterized in that** one of the hollow chambers (25) of the profile (18) of the carrying element (5) cooperates with the guideway of the base frame (3).

16. A carrying device according to any one of the preceding claims, **characterized by** at least one wheel (54) arranged near an end of the carrying element (5).

17. A carrying device according to any one of the preceding claims, **characterized in that** the carrying element (5; 105) defines at its upper side a channel (28) for supporting a front wheel and a rear wheel of a bicycle (2) and in its entirety is movable relative to the base frame (3; 103) between the transport position and the loading and/or unloading position.
